# EUROPÄISCHE PATENTSCHRIFT

(11) **EP 2 759 963 B1**
(45) Veröffentlichungstag und Bekanntmachung des Hinweises auf die Patenterteilung: **27.06.2018**
(21) Anmeldenummer: 13189622.7
(22) Anmeldetag: 22.10.2013
(51) Int. Cl.: G06Q 10/00, G06Q 10/06

(54) **Energiemanagement für PET-Recycling-Anlagen**
Energy management for PET recycling systems
Gestion de l'énergie pour installations de recyclage de PET

(30) Priorität: 24.01.2013 DE 102013201116
(43) Veröffentlichungstag der Anmeldung: 30.07.2014
(73) Patentinhaber: Krones AG, 93073 Neutraubling (DE)
(72) Erfinder: Peters, Norbert, 93073 Neutraubling (DE)
(74) Vertreter: Grünecker Patent- und Rechtsanwälte PartG mbB

(56) Entgegenhaltungen:
- EP-A2- 2 366 656

## Beschreibung

### Stand der Technik

Die Erfindung betrifft ein Verfahren der im Oberbegriff des Patentanspruchs 1 angegebenen Art sowie eine Anlage der im Oberbegriff des Patentanspruchs 7 angegebenen Art.

Bei heutigen Kunststoff-Recyclinganlagen, wie beispielsweise bei Anlagen zur Wiederverwertung von Polyethylenterephthalat (PET), sind die Auslegungen so erstellt, dass die gesamte maximale Leistung aller Energieverbrauchenden Komponenten einer Anlage jederzeit durch die Hardware, z.B. Stromschienen, Hauptschalter, Transformatoren, Generatoren etc., bedient werden kann. Ein Beispiel für eine derartige herkömmliche Anlage ist in der EP 2 366 656 A2 beschrieben.

Nachteilig hierbei ist unter anderem, dass elektrische Spitzenlasten einer so dimensionierten Anlage zur Abrechnung beim Energielieferanten gebracht werden müssen, die unter Umständen praktisch nie oder nur selten auftreten.

### Aufgabe

Es ist somit Aufgabe der Erfindung eine Kunststoff-Recyclinganlage zu verbessern, insbesondere hinsichtlich ihrer Effizienz und Auslegung.

### Lösung

Dies wird erfindungsgemäß durch ein Verfahren nach Anspruch 1 und eine Anlage nach Anspruch 7 erreicht. Vorteilhafte Ausführungsformen und Weiterbildungen sind Gegenstand der Unteransprüche.

Ein erfindungsgemäßes Verfahren kann dabei den Energieverbrauch einzelner oder mehrerer oder aller Energieverbraucher der Kunststoff-Recyclinganlage erfassen.

Ebenso kann ein Betriebszustand der Kunststoff-Recyclinganlage erfasst werden, sowie eine Identifizierung der für den Betriebszustand benötigten Energieverbraucher erfolgen.

Dabei kann eine Hierarchie der Energieverbraucher in Abhängigkeit ihres Energieverbrauchs und/oder ihres Betriebsmodus und/oder des Betriebszustandes der Kunststoff-Recyclinganlage bei der Versorgung der benötigten Energieverbraucher mit Energie berücksichtigt werden, wobei die an die Gesamtheit der benötigten Energieverbraucher maximale gelieferte Spitzenleistung kleiner sein kann, als die Summe der Nennspitzenleistungen aller einzelnen bzw. aller benötigten Energieverbraucher.

Die der Anlage bereitgestellte Energie bzw. Leistung kann somit intelligent begrenzt und verwaltet werden, so dass die maximale bereitgestellte Energie kleiner als die Summe der maximalen Energien der einzelnen benötigten Energieverbraucher sein kann, da beispielsweise nur die momentan benötigten Energieverbraucher mit Energie versorgt werden, bzw. die Energieverbraucher mit Energien gemäß einer vorherbestimmten Hierarchie versorgt werden, wobei verhindert werden kann, dass zur gleichen Zeit alle Energieverbraucher mit 100 % Leistung betrieben werden. Dabei kann im Übrigen die Energieversorgung einzelner Energieverbraucher kontinuierlich und/oder getaktet erfolgen.

Unter getakteter Energieversorgung kann dabei sowohl die Möglichkeit einer regelmäßig getaktete Energieversorgung als auch die Möglichkeit einer unregelmäßig getaktete Energieversorgung, wie z.B. einmaliges Ein- und Ausschalten des Energieverbrauchers, verstanden werden.

Diese intelligente Energieverwaltung hat unter anderem den Vorteil, dass die Anlage bzw. die Hardwarekomponenten, wie z.B. Stromschienen, Hauptschalter, Transformatoren, Generatoren, etc. kleiner ausgelegt werden können und Energie gespart werden kann.

Auch kann durch die mögliche Verkleinerung besagter Hardwarekomponenten eine kompaktere und platzsparendere Bauform der Anlage realisiert werden.

An dieser Stelle sei erwähnt, dass unter den Begriffen Last, Energie und Leistung, elektrische Lasten, elektrische Energien und elektrische Leistungen verstanden werden sollen. Zudem soll sich der Begriff Material, sofern nicht ausdrücklich anders erwähnt, auf Kunststoffmaterialen, insbesondere PET-Kunststoffe beziehen.

Die benötigten Energieverbraucher können mit Energie für eine vorgegebene Energieverbraucher-Einschaltdauer und/oder zu einem vorgegebenen Energieverbraucher-Einschaltzeitpunkt versorgt werden in Abhängigkeit der Hierarchie der Energieverbraucher und/oder ihres Betriebsmodus und/oder des Betriebszustandes der Kunststoff-Recyclinganlage.

Mit anderen Worten die Einschaltdauer und/oder der Einschaltzeitpunkt für jeden einzelnen Energieverbraucher kann von der intelligenten Energieverwaltung individuell gesteuert und festgelegt werden.

Dies hat unter anderem den Vorteil, dass z.B. ein punktgenaues und individuelles Anfahren der Energieverbraucher, d.h. ein genaues individuelles Steuern der Energieversorgung der einzelnen Energieverbraucher hinsichtlich Energieverbraucher-Einschaltdauer und Energieverbraucher-Einschaltzeitpunkt in der Summe der verbrauchten Energien der Energieverbraucher zu Energieeinsparungen führen kann.

So können beispielsweise benötigte Energieverbraucher die im Vergleich zu anderen benötigten Energieverbrauchern schneller ihre Betriebsbereitschaft erreichen, zu einem späteren Zeitpunkt eingeschaltet werden als Energieverbraucher, welche mehr Zeit benötigen um Ihre Betriebsbereitschaft zu erreichen. So kann beispielsweise insbesondere beim Aufheizen/Anfahren der Kunststoff-Recyclinganlage Energie eingespart werden, da bereits eingeschaltete und betriebsbereite Energieverbraucher nicht unnötig am Bereitschaftspunkt auf die Bereitschaft anderer Energieverbraucher warten müssten und so Energie verlieren, die nicht produktiv genutzt wird.

Ferner ist es möglich, dass die Energieversorgung aller oder einer Auswahl der benötigten Energieverbraucher zu einem vorgegebenen Betriebszeitpunkt und für eine vorgegebene Betriebsdauer reduziert oder erhöht wird.

Dies kann unter anderem die Betriebssicherheit der Kunststoff-Recyclinganlage erhöhen und beispielsweise können Energieverbraucher, welche mehr Energie verbrauchen als andere Energieverbraucher, zeitweilig in ihrem Energieverbrauch bzw. ihrer Leistung gedrosselt werden, um eine Überbelastung der Energieversorgung der Kunststoff-Recyclinganlage vermeiden zu können.

Darüber hinaus kann das Erfassen des Energieverbrauches jedes einzelnen Energieverbrauchers der Kunststoff-Recyclinganlage und/oder das Erfassen eines Betriebszustandes der Kunststoff-Recyclinganlage und/oder die Identifizierung der für den Betriebszustand benötigten Energieverbraucher und/oder die Erstellung einer Hierarchie der Energieverbraucher, das Erfassen einer Eingabe durch eine Bedienperson und/oder das Auslesen vorherbestimmter Parameter aus einer Datenbank zu Energieverbrauch des Energieverbrauchers und/oder zum Betriebszustand der Kunststoff-Recyclinganlage und/oder zur Hierarchie der Energieverbraucher beinhalten.

Beispielsweise kann eine Datenbank die Kenndaten von Energieverbrauchern, einschließlich deren Spitzenleistung, beinhalten, so dass aus besagten Kenndaten z.B. die theoretische maximale Spitzenleistung der Anlage als Summe aller Spitzenleistungen der einzelnen Energieverbraucher berechnet werden kann.

Daneben kann eine Datenbank auch vordefinierte Parameter zur Festlegung einer Hierarchie der Energieverbraucher beinhalten, beispielsweise in Abhängigkeit des benötigten Betriebszustandes der Anlage bzw. des benötigten Betriebszustandes des Energieverbrauchers.

Auch ist denkbar, dass wenigstens ein Umgebungsparameter der Kunststoff-Recyclinganlage gemessen werden kann, und die Versorgung der benötigten Energieverbraucher mit Energie unter Berücksichtigung des besagten wenigstens einen Umgebungsparameters erfolgen kann.

Beispielsweise kann der wenigstens eine Umgebungsparameter die Umgebungstemperatur und/oder die Umgebungsluftfeuchtigkeit und/oder der Umgebungsdruck und/oder die Uhrzeit sein.

So kann vorteilhafterweise der Energieverbrauch in Abhängigkeit der Umgebungsbedingungen optimiert werden.

Beispielweise kann bei saisonal und/oder tageszeitlich bedingten Änderungen in der Umgebungstemperatur und/oder Umgebungsluftfeuchtigkeit die Energiezufuhr von Heiz- und/oder Kühlkomponenten und/oder Trocknungskomponenten reguliert, insbesondere reduziert, werden.

Ebenso kann die Energieversorgung der Energieverbraucher in Abhängigkeit der Tageszeit geregelt werden, um beispielsweise von niedrigeren Nachtstromtarifen eines Energieanbieters profitieren zu können. Im Übrigen können unter einem Betriebszustand der Kunststoff-Recyclinganlage, das Aufheizen/Anfahren, das Abfahren, der kontinuierliche oder getaktete Betrieb, der Betrieb für verschiedene Auslastungen, sowie bestimmte Anlagenkonfigurationen für bestimmte Verfahrenschritte der Kunststoffwiederverwertung, wie beispielsweise Waschvorgänge, Rührvorgänge, Pumpvorgänge, Lüftungsvorgänge, Trocknungsvorgänge, Kristallisationsvorgänge, Beförderungsvorgänge, Extrudervorgänge, Filtervorgänge, Granulierungsvorgänge, etc. verstanden werden.

In der Regel kann der Betriebszustand bzw. der Betriebsvorgang des Aufheizens/Anfahrens der Kunststoff-Recyclinganlage den größten Strom-/Energiebedarf erfordern.

Die intelligente Energiewaltung kann für einen gegebenen Betriebszustand der Kunststoff-Recyclinganlage die benötigte Energieversorgung prognostizieren, beispielsweise einen maximalen Momentan-Energieverbrauch bestimmen und/oder beispielsweise einen Ist-Betriebszustand mit einem Soll-Betriebszustand vergleichen.

Auf unplanmäßige Abweichungen vom prognostizierten Energiebedarf, beispielsweise verursacht durch ein offenes Hallentor welches das Aufheizen der Anlage in der normalen dafür vorgesehenen Zeit verhindert, kann von der intelligenten Energieverwaltung flexibel reagiert werden kann und beispielsweise durch gesteuerte Veränderungen von Einschaltdauern ausgewählter Energieverbraucher dafür gesorgt werden, das der Soll-Betriebszustand der Kunststoff-Recyclinganlage auch unter Nicht-Standardumgebungsbedingungen erreicht werden kann.

Die intelligente erfindungsgemäße Energieverwaltung kann mittels Verwendung einer Hierarchie der Energieverbraucher bzw. der benötigten Energieverbraucher die Energieverbraucher mit Energie versorgen in Abhängigkeit ihres Energieverbrauchs und/oder ihres Betriebsmodus und/oder des Betriebszustandes der Kunststoff-Recyclinganlage.

Die Kriterien nach denen besagte Hierarchie erstellt und/oder verwendet werden kann können unter anderem beispielsweise folgende Kriterien beinhalten oder berücksichtigen: Energieverbraucher-Einschaltdauer, Energieverbraucher-Einschaltzeitpunkt,Energieverbraucher-Betriebsbereitschaftsanforderung, Leistungs-/Energiebedarf des Energieverbrauchers, Relevanz des Energieverbrauchers für einen gegebenen Betriebszustand der Kunststoff-Recyclinganlage, Betriebsmodus des Energieverbrauchers, Betriebzustand der Kunststoff-Recyclinganlage, etc.

Genannte Kriterien können für eine hierarchische Einteilung der Energieverbraucher der Kunststoff-Recyclinganlage verwendet werden.

Ferner können beispielsweise Energieverbraucher der Kunststoff-Recyclinganlage für einen gegebenen Betriebszustand der Anlage beispielsweise in wenigstens vier Relevanzklassen, basierend auf Ihrem Betriebsmodus, eingeteilt werden, z.B. in Energieverbraucher die für den gegebenen Betriebszustand der Anlage eingeschaltet und kontinuierlich mit einer Leistung von 100 % betrieben werden (Relevanzklasse I), in Energieverbraucher die für den gegebenen Betriebszustand der Anlage eingeschaltet und kontinuierlich mit einer Leistung von weniger als 100 % betrieben werden (Relevanzklasse II), in Energieverbraucher die für den gegebenen Betriebszustand der Anlage getaktet eingeschaltet und getaktet mit einer Leistung von 100 % betrieben werden (Relevanzklasse III), sowie in Energieverbraucher die für den gegebenen Betriebszustand der Anlage getaktet eingeschaltet und getaktet mit einer Leistung von weniger als 100 % betrieben werden (Relevanzklasse IV).

Gegebenenfalls können z.B. Energieverbraucher, welche für den gegebenen Betriebszustand der Anlage nur optional sind, und/oder welche nur einen unbedeutenden Energie- bzw. Leistungsbedarf, wie z.B. einen Energie- bzw. Leistungsbedarf << 1 % aufweisen, beispielsweise in eine Relevanzklasse V eingeteilt werden.

Die Energieversorgung der benötigten Energieverbraucher kann also gemäß einer Hierarchie erfolgen, welche genannte Kriterien, z.B. basierend auf zugeteilten Relevanzklassen, berücksichtigen kann.

Mit anderen Worten Energieverbraucher der Relevanzklasse I können kontinuierlich mit Energie für einen kontinuierlichen Betrieb mit 100 % Leistung versorgt werden, während Energieverbraucher der Relevanzklasse II kontinuierlich mit Energie für einen kontinuierlichen Betrieb bei weniger als 100 % Leistung versorgt werden können, sowie Energieverbraucher der Relevanzklasse III getaktet mit Energie zum Betrieb bei einer Leistung von 100 % und Energieverbraucher der Relevanzklasse IV getaktet mit Energie zum Betrieb bei einer Leistung von weniger als 100 % versorgt werden können. Dementsprechend können auch Energieverbraucher der Relevanzklasse V kontinuierlich oder getaktet mit Energie zum Betrieb bei Leistungen << 1 % versorgt werden.

Es sei hier betont, dass die Relevanzklassenaufteilung zwar die Hierarchie mit der Energieverbraucher mit Energie versorgt werden können, beeinflussen und festlegen kann, aber diese nicht zwangsläufig vollkommen festlegen muss.

Die Hierarchie mit der Energieverbraucher mit Energie versorgt werden, kann nämlich ebenfalls von den weiter oben genannten Kriterien bestimmt werden. Ein Energieverbraucher einer niederen Relevanzklasse kann beispielsweise eher eingeschaltet werden als ein Energieverbraucher einer höheren Relevanzklasse, da der Energieverbraucher der niederen Relevanzklasse beispielsweise eine längere Zeit benötigt um seine Betriebsbereitschaft zu erreichen.

Ebenso kann z.B. bei Energieverbrauchern die der gleichen Relevanzklasse zugeteilt sind, eine weitere Einteilung nach Priorität unter besagten Energieverbrauchern erfolgen, in der beispielsweise deren Einschaltzeitpunkt, Einschaltdauer etc. in Abhängigkeit des Betriebszustand der Kunststoff-Recyclinganlage berücksichtigt wird.

Für einen gegebenen Betriebszustand der Anlage kann also eine Hierarchie der Energieverbraucher angegeben werden, welche unter anderem auf oben genanten Kriterien beruht, und z.B. insbesondere eine Verteilung von Relevanzklassen angegeben enthalten kann, wobei ein Betriebszustand in dem alle benötigten Energieverbraucher bzw. alle Energieverbraucher der Relevanzklasse I zugeordnet sind, ausgeschlossen werden kann.

Einem Energieverbraucher können jedoch, z.B. je nach Betriebszustand der Anlage bzw. des Energieverbrauchers, verschiedene Relevanzklassen zugeordnet werden. Mit anderen Worten die Relevanzklasseneinteilung der Energieverbraucher kann dynamisch erfolgen, d.h. ein Energieverbraucher kann ohne weiteres zwischen Relevanzklassen wechseln.

Eine erfindungsgemäße Anlage zum Recyceln von Kunststoff kann also eine Vielzahl von Energieverbrauchern, sowie wenigstens eine intelligente Energieverwaltungseinheit in Kommunikation mit besagten Energieverbrauchern und in Kommunikation mit einer zentralen Steuereinheit für die Energieverbraucher der Anlage und/oder in Kommunikation mit dezentralen Steuereinheiten der Energieverbraucher der Anlage umfassen.

Dabei kann besagte intelligente Energieverwaltungseinheit dafür konfiguriert sein, den Energieverbrauch jedes einzelnen Energieverbrauchers der Kunststoff-Recyclinganlage zu erfassen, den Betriebszustandes der Kunststoff-Recyclinganlage zu erfassen, die für den Betriebszustand benötigten Energieverbraucher zu identifizieren, eine Hierarchie der Energieverbraucher in Abhängigkeit ihres Energieverbrauchs und/oder ihres Betriebsmodus und/oder des Betriebszustandes der Kunststoff-Recyclinganlage zu verwenden, und die benötigten Energieverbraucher mit Energie unter Berücksichtigung besagter Hierarchie versorgen zu können, wobei die an die Gesamtheit der benötigten Energieverbraucher maximale von der Energieverwaltungseinheit zur Verfügung stellbare Spitzenleistung kleiner ist, als die Summe der Nennspitzenleistungen aller einzelnen bzw. aller benötigten Energieverbraucher.

Als Beispiele für Energieverbraucher bzw. benötigte Energieverbraucher einer Anlage zum Recyceln von Kunststoff seien insbesondere, Zerkleinerungs- und/oder Wascheinheiten für die der Wiederverwertung zugeführten Kunststoffmaterialien, sowie Einheiten zur Beförderung von Kunststoffmaterialien und/oder anderer Materialien, Antriebseinheiten, Rührwerkseinheiten, Lüftungseinheiten, Gebläseeinheiten, Pumpeinheiten, Filtereinheiten, Siebeinheiten, Granuliereinheiten, Trocknungseinheiten, Extrudereinheiten etc. verstanden werden.

Hausinterne Tests und Simulationen haben gezeigt, dass eine Anlage die mit einer erfindungsgemäßen intelligenten Energieverwaltungseinheit betrieben wird und/oder bei Anlagen die unter Berücksichtigung einer erfindungsgemäßen intelligenten Energieverwaltungsstruktur von Beginn an konzipiert, ausgelegt und/oder umgerüstet sind, Energieeinsparungen von mehr als 30 % bezogen auf eine Anlage ohne erfindungsgemäße Energieverwaltungseinheit bzw. Energieverwaltungsstruktur erzielt werden können.

Folgende Figuren stellen beispielhaft dar:

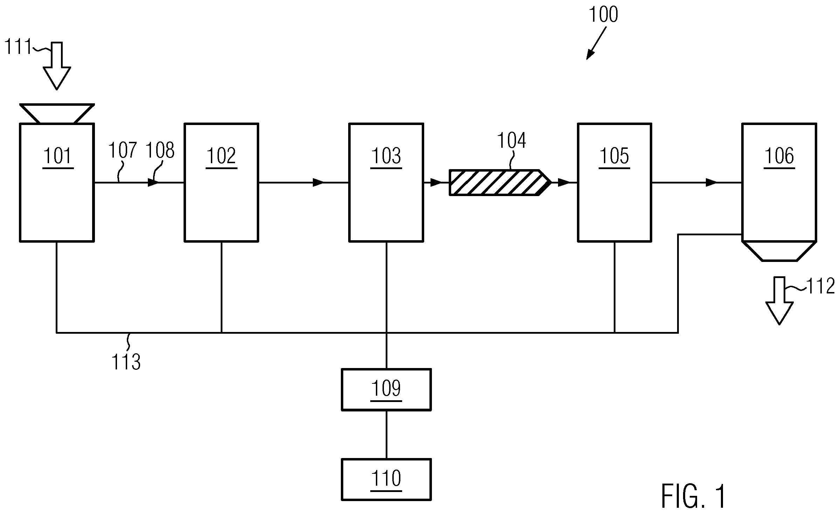

**Fig.1**: Schematisches Beispiel einer Kunststoff-Recyclinganlage

Die **Fig. 1** stellt beispielhaft eine Kunststoff-Recyclinganlage dar, welche beispielsweise über wenigstens sieben verschiede Anlagenkomponenten bzw. Energieverbraucher 101, 102, 103, 104, 105, 106 und 107 verfügen kann.

Dabei kann einem ersten Energieverbraucher 101 wiederzuverwertendes Kunststoffmaterial zugeführt 110 werden. Bei besagtem Energieverbraucher 101 kann es sich beispielsweise um ein Puffersilo mit Rührwerk handeln, wobei z.B. das Rührwerk kontinuierlich oder getaktet, sowie mit 100 % Leistung oder weniger als 100 % Leistung, betrieben werden kann, bevorzugterweise jedoch getaktet betrieben wird mit einer Leistung von weniger als 100 %.

Mit anderen Worten der Energieverbraucher 101 kann in eine der oben beschriebenen Relevanzklassen eingeteilt werden, z.B. bevorzugterweise in Relevanzklasse IV.

Anlagenkomponente bzw. Energieverbraucher 101 kann natürlich noch weitere (nicht dargestellte) Energieverbraucher beinhalten, wie z.B. eine kontinuierlich betriebene Durchflusswaage und/oder zusätzliche optional betriebene Waagen, welche nach dem Prinzip der elektromagnetischer Kraftkompensation arbeiten können. Auch diese weiteren genannten Energieverbraucher können in besagte Relevanzklassen eingeteilt werden.

Wenigstens eine Materialbeförderungseinheit 107 mit Beförderungsrichtung 108 kann zu verarbeitendes Material zwischen den Anlagenkomponenten transportieren und kann beispielsweise ebenfalls kontinuierlich oder getaktet, sowie mit 100 % Leistung oder weniger als 100 % Leistung, betrieben werden.

Bevorzugterweise kann die Materialbeförderungseinheit 107 kontinuierlich mit weniger als 100 % Leistung, betrieben werden, also z.B. der Relevanzklasse II zugeordnet werden.

Eine weitere Anlagenkomponente, bzw. ein weiterer Energieverbraucher 102, kann eine Wascheinheit sein, welche von mit zu verarbeitendem Material aus der ersten Anlagenkomponente 101 über die Materialbeförderungseinheit 107 mit Material beschickt werden kann.

Besagte Wascheinheit, einschließlich der ihr zugeordneten Komponenten, kann kontinuierlich oder getaktet, sowie mit 100 % Leistung oder weniger als 100 % Leistung, betrieben werden, wobei es beispielsweise bevorzugt sein kann, dass die Wascheinheit, einschließlich von z.B. (nicht dargestellten) Vorwasch- und/oder Intensivwascheinheiten, Dichtetrenneinheiten, Pump- und/oder Umwälzeinheiten etc., kontinuierlich mit einer Leistung von weniger als 100 % betrieben werden kann, also der Relevanzklasse II zugeordnet werden kann.

Das gereinigte wiederzuwertende Material kann anschließend weiterbefördert werden zu einer Anlagenkomponente 103, die beispielsweise als Trocknungseinheit und/oder Kristallisationseinheit ausgeführt ist, und in der das feuchte wiederzuwertende Material, erwärmt, kristallisiert und getrocknet werden kann. Diese Anlagenkomponente bzw. dieser Energieverbraucher 103 kann ebenfalls kontinuierlich oder getaktet, sowie mit 100 % Leistung oder weniger als 100 % Leistung, betrieben werden. Bevorzugt hierbei kann jedoch ein kontinuierlicher Betrieb bei 100 % Leistung sein, d.h. diese Komponente 103 kann bevorzugt der Relevanzklasse I zugeordnet werden.

In einem weiteren Prozessschritt der Wiederverwertung von Kunststoffmaterial, kann das gereinigte und getrocknete zu recycelnde Kunststoffmaterial in einer Anlagenkomponente 104, beispielsweise einem Extruder, zu einer Schmelze verarbeitet werden. Zur Verbesserung bzw. Erhaltung der Viskosität der Schmelze kann dabei am Extruder ein Vakuum mittels (nicht dargestellter Vakuumpumpen) erzeugt werden. Besagte Anlagenkomponente 104, einschließlich etwaiger ihr zugeordneter Komponenten, wie z.B. besagte Vakuumpumpen, Filtereinheiten, Siebwechsler etc., kann ebenfalls kontinuierlich oder getaktet, sowie mit 100 % Leistung oder weniger als 100 % Leistung, betrieben werden. Dabei kann ein kontinuierlicher Betrieb mit einer Leistung von weniger als 100 % bevorzugt sein, also z.B. die Anlagenkomponente 104 der Relevanzklasse II zugeordnet werden.

Die erzeugte Schmelze kann anschließend in einer anderen Anlagenkomponente 105, beispielsweise einer Unterwassergranulationseinheit granuliert werden, wobei besagte Anlagenkomponente bzw. Energieverbraucher 105 wiederum kontinuierlich oder getaktet, sowie mit 100 % Leistung oder weniger als 100 % Leistung, betrieben werden kann. Bevorzugt kann die Anlagenkomponente 105 jedoch kontinuierlich mit einer Leistung von weniger als 100 % betrieben werden kann, also der Relevanzklasse II zugeordnet werden.

Abschließend kann beispielsweise das erzeugte bzw. neu gewonnene Kunststoffgranulat weiter zu einer Anlagenkomponente 106, beispielsweise einer Absackstation, geleitet werden wo das Kunststoffgranulat abkühlen kann.

Zur Vermeidung unerwünschter Zusammenballungen des Kunststoffgranulats, kann mit einem Rührwerk (nicht dargestellt) kontinuierlich oder getaktet gerührt werden. Bevorzugterweise kann beispielsweise besagtes Rührwerk getaktet mit einer Leistung von weniger als 100 % betrieben werden, d.h. also der Relevanzklasse IV zugeordnet werden.

Von der Anlagenkomponente 106 kann das so wiederverwertete Kunststoffmaterial als Granulat neuen Verwendungen bzw. Produktionsschritten (nicht dargestellt) zugeführt 112 werden.

Die Anlagenkomponenten bzw. Energieverbraucher 101, 102, 103, 104, 105, 106 und 107 einschließlich von etwaigen ihnen zugeordneten (nicht dargestellten) Energieverbraucher können über eine Leitung 113 zur Kommunikation von Steuerbefehlen und/oder Daten mit einer intelligenten Energieverwaltungseinheit 109 und/oder einer zentralen Steuereinheit 110 und/oder mit (nicht dargestellten) dezentralen Steuereinheiten der Energieverbraucher der Anlage, in Verbindung stehen.

Allen genannten Energieverbrauchern können wie oben beispielhaft beschrieben Relevanzklassen zugeordnet werden. Wie bereits erwähnt kann diese Relevanzklassenzuordnung jedoch dynamisch erfolgen und abhängig vom Betriebszustand der Anlage und/oder Betriebszustand des Energieverbrauchers sein.

Wie weiter oben ebenfalls erwähnt kann die Relevanzklassenaufteilung zwar die Hierarchie mit der Energieverbraucher 101, 102, 103, 104, 105, 106 und 107 mit Energie versorgt werden können beeinflussen und festlegen, aber muss diese nicht zwangsläufig vollkommen festlegen.

Die Hierarchie mit der Energieverbraucher 101, 102, 103, 104, 105, 106 und 107 mit Energie versorgt werden können, kann nämlich ebenfalls von den weiter oben genannten Kriterien, wie z.B. Energieverbraucher-Einschaltdauer, Energieverbraucher-Einschaltzeitpunkt, Energieverbraucher-Betriebsbereitschaftsanforderung, Leistungs-/Energiebedarf des Energieverbrauchers, Relevanz des Energieverbrauchers für einen gegebenen Betriebszustand der Kunststoff-Recyclinganlage 100, Betriebsmodus des Energieverbrauchers, Betriebzustand der Kunststoff-Recyclinganlage 100, etc., bestimmt werden.

Ein Energieverbraucher einer niederen Relevanzklasse kann beispielsweise eher eingeschaltet werden als ein Energieverbraucher einer höheren Relevanzklasse, da der Energieverbraucher der niederen Relevanzklasse beispielsweise eine längere Zeit benötigt um seine Betriebsbereitschaft zu erreichen.

Ebenso kann z.B. bei Energieverbrauchern die der gleichen Relevanzklasse zugeteilt sind, eine weitere Einteilung zur Prioritäten unter besagten Energieverbrauchern erfolgen, in der beispielsweise deren Einschaltzeitpunkt, Einschaltdauer etc. in Abhängigkeit des Betriebszustand der Kunststoff-Recyclinganlage 100 berücksichtigt wird. Auf Grundlage dieser Hierarchie bzw. dieser Relevanzklassen in Abhängigkeit des Energieverbrauchs und/oder des Betriebsmodus des gegebenen Energieverbrauchers und/oder des Betriebszustandes der Kunststoff-Recyclinganlage, kann die intelligente Energieverwaltungseinheit 109 die benötigten Energieverbraucher unter Berücksichtigung besagter Hierarchie bzw. Relevanzklassen kontinuierlich und/oder getaktet mit Energie versorgen, wobei die an die Gesamtheit der benötigten Energieverbraucher maximale von der Energieverwaltungseinheit zur Verfügung stellbare Spitzenleistung kleiner ist, als die Summe der Nennspitzenleistungen der aller einzelnen bzw. aller benötigter Energieverbraucher.

Ein erster Anlagenbetriebszustand bzw. Anlagenbetriebsvorgang, z.B. das Aufheizen/Anfahren der Anlage, kann sich unter anderem dadurch auszeichnen, dass Energieverbraucher 101 die Relevanzklasse II zugewiesen werden kann, Energieverbraucher 102 die Relevanzklasse II, Energieverbraucher 103 die Relevanzklasse I, Energieverbraucher 104 die Relevanzklasse II, Energieverbraucher 105 die Relevanzklasse II, Energieverbraucher 106 die Relevanzklasse IV, sowie Energieverbraucher 107 die Relevanzklasse II.

Aufgrund verschiedener Betriebsbereitschaftsanforderungen der Energieverbraucher, z.B. veschiedener benötigter Zeiten zur Erreichung der Betriebsbereitschaft kann es jedoch sein, dass z.B. Energieverbraucher 104 mit zugeteilter Relevanzklasse II, vor Energieverbraucher 103 mit zugeteilter Relevanzklasse I eingeschaltet wird, da Energieverbraucher 104 beispielsweise eine längere Zeit als Energieverbraucher 103 benötigt, um Betriebsbereitschaft zu erreichen.

Beispielhafterweise kann sich ein zweiter Anlagenbetriebszustand, z.B. bei einer ersten Auslastung der Anlage, unter anderem dadurch auszeichnen, dass Energieverbraucher 101 die Relevanzklasse IV zugewiesen werden kann, Energieverbraucher 102 die Relevanzklasse II, Energieverbraucher 103 die Relevanzklasse I, Energieverbraucher 104 die Relevanzklasse II, Energieverbraucher 105 die Relevanzklasse II, Energieverbraucher 106 die Relevanzklasse IV, sowie Energieverbraucher 107 die Relevanzklasse II.

In einem beispielhaften dritten Anlagenbetriebszustand, z.B. bei einer zweiten Auslastung der Anlage, welche gegenüber genannter erster Auslastung erhöht sein kann, kann folgende beispielsweise folgende Einteilung der Energieverbraucher realisiert sein: Energieverbraucher 101 kann die Relevanzklasse II zugewiesen werden, Energieverbraucher 102 die Relevanzklasse II, Energieverbraucher 103 die Relevanzklasse I, Energieverbraucher 104 die Relevanzklasse II, Energieverbraucher 105 die Relevanzklasse II, Energieverbraucher 106 die Relevanzklasse III, sowie Energieverbraucher 107 die Relevanzklasse I.

Die intelligente Energieverwaltungseinheit 109 kann für einen gegebenen Betriebszustand der Anlage auf Grundlage dieser beispielhaften Relevanzklasseneinteilung der Energieverbraucher, die Energieverbraucher hierarchisch gemäß Ihrer zugewiesenen Relevanzklasse und/oder hierarchisch gemäß vorherbestimmter Werte für Energieverbraucher-Einschaltzeitpunkt, Energieverbraucher-Einschaltdauer, etc. kontinuierlich und/oder getaktet mit entsprechender Energie versorgen.

Der Vollständigkeit halber sei erwähnt, dass die hier beispielhaft beschriebene Kunststoff-Recyclinganlage 100 mit Merkmalen aus dem vorangegangenen allgemeinen Teil der Beschreibung kombiniert werden kann. Beispielsweise kann die Recyclinganlage 100 eine Sensorik für das Erfassen von Umgebungsbedingungsparametern, wie z.B. Umgebungstemperatur und/oder Umgebungsluftfeuchtigkeit und/oder Umgebungsdruck und/oder Uhrzeit, aufweisen.

Die Versorgung der Energieverbraucher der Anlage (100) kann dann beispielsweise unter Berücksichtigung von wenigstens einem der genannten Umgebungsparameter erfolgen.

Es folgt 1 Blatt mit einer Figur.

Die Bezugszeichen sind dabei wie folgt belegt.
**100** Beispielhafte Kunststoff-Recyclinganlage
**101** Energieverbraucher, Anlagenkomponente
**102** Energieverbraucher, Anlagenkomponente
**103** Energieverbraucher, Anlagenkomponente
**104** Energieverbraucher, Anlagenkomponente
**105** Energieverbraucher, Anlagenkomponente
**106** Energieverbraucher, Anlagenkomponente
**107** Materialbeförderungseinheit, Energieverbraucher, Anlagenkomponente
**108** Beförderungsrichtung
**109** intelligente Energieverwaltungseinheit
**110** zentrale Steuereinheit
**111** Zufuhr von zu wiederverwertendem Kunststoffmaterial
**112** Abfuhr von aufbereitetem Kunststoffmaterial bzw. Kunststoffgranulat
**113** Leitung zur Kommunikation von Steuerbefehlen und/oder Daten zwischen
Energieverbrauchern und intelligenter Energieverwaltungseinheit und/oder zentraler Steuereinheit

## Patentansprüche

1. Verfahren zum Betrieb einer Kunststoff-Recyclinganlage (100), umfassend:
Erfassen des Energieverbrauches einzelner oder mehrerer oder aller Energieverbraucher (101, 102, 103, 104, 105, 106, 107) der Kunststoff-Recyclinganlage (100),
Erfassen eines Betriebszustandes der Kunststoff-Recyclinganlage (100),
Identifizierung der für den Betriebszustand benötigten Energieverbraucher (101, 102, 103, 104, 105, 106, 107),
Verwendung einer Hierarchie der Energieverbraucher (101, 102, 103, 104, 105, 106, 107) in Abhängigkeit ihres Energieverbrauchs und/oder ihres Betriebsmodus und/oder des Betriebszustandes der Kunststoff-Recyclinganlage (100),
Versorgung der benötigten Energieverbraucher (101, 102, 103, 104, 105, 106, 107) mit Energie unter Berücksichtigung besagter Hierarchie durch wenigstens eine intelligente Energieverwaltungseinheit (109) in Kommunikation (113) mit besagten Energieverbrauchern (101, 102, 103, 104, 105, 106, 107) und in Kommunikation mit einer zentralen Steuereinheit (110) für die Energieverbraucher der Anlage (100) und/oder in Kommunikation mit dezentralen Steuereinheiten der Energieverbraucher der Anlage, wobei die an die Gesamtheit der benötigten Energieverbraucher (101, 102, 103, 104, 105, 106, 107) maximale gelieferte Spitzenleistung kleiner ist, als die Summe der Nennspitzenleistungen der einzelnen benötigten Energieverbraucher (101, 102, 103, 104, 105, 106, 107) und wobei verhindert wird, dass zur gleichen Zeit alle Energieverbraucher mit 100 % Leistung betrieben werden,
wobei die intelligente Energieverwaltungseinheit (109) die benötigten Energieverbraucher unter Berücksichtigung der Hierarchie kontinuierlich und/oder getaktet mit Energie versorgt, wobei die an die Gesamtheit der benötigten Energieverbraucher maximale von der Energieverwaltungseinheit (109) zur Verfügung stellbare Spitzenleistung kleiner ist, als die Summe der Nennspitzenleistungen aller benötigter Energieverbraucher,
wobei die verwendete Hierarchie der Energieverbraucher (101, 102, 103, 104, 105, 106, 107) mehrere der folgenden Relevanzklassen berücksichtigt:
Relevanzklasse I, für Energieverbraucher, die für den gegebenen Betriebszustand der Kunststoff-Recyclinganlage (100) eingeschaltet und kontinuierlich mit einer Leistung von 100 % betrieben werden,
Relevanzklasse II, für Energieverbraucher, die für den gegebenen Betriebszustand der Kunststoff-Recyclinganlage (100) eingeschaltet und kontinuierlich mit einer Leistung von weniger als 100 % betrieben werden,
Relevanzklasse III, für Energieverbraucher, die für den gegebenen Betriebszustand der Anlage getaktet eingeschaltet und getaktet mit einer Leistung von 100 % betrieben werden,
Relevanzklasse IV, für Energieverbraucher, die für den gegebenen Betriebszustand der Anlage getaktet eingeschaltet und getaktet mit einer Leistung von weniger als 100 % betrieben werden,
Relevanzklasse V, für Energieverbraucher, welche für den gegebenen Betriebszustand der Anlage nur optional sind, und/oder welche nur einen unbedeutenden Energie- bzw. Leistungsbedarf, z.B. << 1 %, aufweisen,
wobei die Energieversorgung der benötigten Energieverbraucher unter Berücksichtigung der ihnen zugeteilten Relevanzklasse erfolgt
und wobei ein Energieverbraucher der Relevanzklasse II zugeordnet ist.

2. Verfahren nach Anspruch 1, wobei die benötigten Energieverbraucher (101, 102, 103, 104, 105, 106, 107) mit Energie für eine vorgegebene Energieverbraucher-Einschaltdauer und/oder zu einem vorgegebenen Energieverbraucher-Einschaltzeitpunkt versorgt werden in Abhängigkeit der Hierarchie der Energieverbraucher (101, 102, 103, 104, 105, 106, 107) und/oder ihres Betriebsmodus und/oder des Betriebszustandes der Kunststoff-Recyclinganlage (100).

3. Verfahren nach einem der vorherigen Ansprüche, wobei die Energieversorgung aller oder einer Auswahl der benötigten Energieverbraucher (101, 102, 103, 104, 105, 106, 107) zu einem vorgegebenen Betriebszeitpunkt und für eine vorgegebene Betriebsdauer reduziert oder erhöht wird.

4. Verfahren nach einem der vorherigen Ansprüche, wobei das Erfassen des Energieverbrauches jedes einzelnen Energieverbrauchers (101, 102, 103, 104, 105, 106, 107) der Kunststoff-Recyclinganlage (100) und/oder das Erfassen eines Betriebszustandes der Kunststoff-Recyclinganlage (100) und/oder Identifizierung der für den Betriebszustand benötigten Energieverbraucher und/oder die Erstellung einer Hierarchie der Energieverbraucher, das Erfassen einer Eingabe durch eine Bedienperson und/oder das Auslesen vorherbestimmter Parameter aus einer Datenbank zu Energieverbrauch des Energieverbrauchers (101, 102, 103, 104, 105, 106, 107) und/oder zum Betriebszustand der Kunststoff-Recyclinganlage (100) und/oder zur Hierarchie der Energieverbraucher (101, 102, 103, 104, 105, 106, 107) beinhaltet.

5. Verfahren nach einem der vorherigen Ansprüche, wobei wenigstens ein Umgebungsparameter der Kunststoff-Recyclinganlage (100) gemessen wird, und die Versorgung der benötigten Energieverbraucher (101, 102, 103, 104, 105, 106, 107) mit Energie unter Berücksichtigung des besagten wenigstens einen Umgebungsparameters erfolgt.

6. Verfahren nach Anspruch 5, wobei der wenigstens eine Umgebungsparameter die Umgebungstemperatur und/oder die Umgebungsluftfeuchtigkeit und/oder der Umgebungsdruck und/oder die Uhrzeit ist.

7. Anlage (100) zum Recyceln von Kunststoff, umfassend:
eine Vielzahl von Energieverbrauchern (101, 102, 103, 104, 105, 106, 107),
wenigstens eine intelligente Energieverwaltungseinheit (109) in Kommunikation (113) mit besagten Energieverbrauchern (101, 102, 103, 104, 105, 106, 107) und in Kommunikation mit einer zentralen Steuereinheit (110) für die Energieverbraucher der Anlage (100) und/oder in Kommunikation mit dezentralen Steuereinheiten der Energieverbraucher der Anlage, welche dafür konfiguriert ist,
den Energieverbrauches jedes einzelnen Energieverbrauchers (101, 102, 103, 104, 105, 106, 107), der Kunststoff-Recyclinganlage (100) zu erfassen,
den Betriebszustandes der Kunststoff-Recyclinganlage (100) zu erfassen,
die für den Betriebszustand benötigten Energieverbraucher (101, 102, 103, 104, 105, 106, 107) zu identifizieren,
eine Hierarchie der Energieverbraucher (101, 102, 103, 104, 105, 106, 107) in Abhängigkeit ihres Energieverbrauchs und/oder ihres Betriebsmodus und/oder des Betriebszustandes der Kunststoff-Recyclinganlage zu verwenden,
die benötigten Energieverbraucher (101, 102, 103, 104, 105, 106, 107) mit Energie unter Berücksichtigung besagter Hierarchie zu versorgen, wobei die an die Gesamtheit der benötigten Energieverbraucher (101, 102, 103, 104, 105, 106, 107) maximale von der Energieverwaltungseinheit (109) zur Verfügung stellbare Spitzenleistung kleiner ist, als die Summe der Nennspitzenleistungen der einzelnen benötigten Energieverbraucher (101, 102, 103, 104, 105, 106, 107) und wobei verhindert wird, dass zur gleichen Zeit alle Energieverbraucher mit 100 % Leistung betrieben werden,
wobei die intelligente Energieverwaltungseinheit (109) die benötigten Energieverbraucher unter Berücksichtigung der Hierarchie kontinuierlich und/oder getaktet mit Energie versorgt, wobei die an die Gesamtheit der benötigten Energieverbraucher maximale von der Energieverwaltungseinheit (109) zur Verfügung stellbare Spitzenleistung kleiner ist, als die Summe der Nennspitzenleistungen aller benötigter Energieverbraucher,
wobei die verwendete Hierarchie der Energieverbraucher (101, 102, 103, 104, 105, 106, 107) mehrere der folgenden Relevanzklassen berücksichtigt:
Relevanzklasse I, für Energieverbraucher, die für den gegebenen Betriebszustand der Kunststoff-Recyclinganlage (100) eingeschaltet und kontinuierlich mit einer Leistung von 100 % betrieben werden,
Relevanzklasse II, für Energieverbraucher, die für den gegebenen Betriebszustand der Kunststoff-Recyclinganlage (100) eingeschaltet und kontinuierlich mit einer Leistung von weniger als 100 % betrieben werden,
Relevanzklasse III, für Energieverbraucher, die für den gegebenen Betriebszustand der Anlage getaktet eingeschaltet und getaktet mit einer Leistung von 100 % betrieben werden,
Relevanzklasse IV, für Energieverbraucher, die für den gegebenen Betriebszustand der Anlage getaktet eingeschaltet und getaktet mit einer Leistung von weniger als 100 % betrieben werden,
Relevanzklasse V, für Energieverbraucher, welche für den gegebenen Betriebszustand der Anlage nur optional sind, und/oder welche nur einen unbedeutenden Energie- bzw. Leistungsbedarf, z.B. << 1 %, aufweisen,
wobei die Energieversorgung der benötigten Energieverbraucher unter Berücksichtigung der ihnen zugeteilten Relevanzklasse erfolgt,
und wobei ein Energieverbraucher der Relevanzklasse II zugeordnet ist.

8. Anlage (100) nach Anspruch 7, wobei die Energieverbraucher (101, 102, 103, 104, 105, 106, 107) eine oder mehrere Einheiten aus folgender Liste umfassen:
Zerkleinerungs- und/oder Wascheinheiten für die der Wiederverwertung zugeführten Kunststoffmaterialien, Einheiten zur Beförderung von Kunststoffmaterialien und/oder anderer Materialien, Antriebseinheiten, Rührwerkseinheiten, Lüftungseinheiten, Gebläseeinheiten, Pumpeinheiten, Filtereinheiten, Siebeinheiten, Granuliereinheiten, Trocknungseinheiten, Extrudereinheiten.

## Claims

1. Method for operating a plastics recycling system (100), comprising:
detecting the energy consumption of individual or several or all energy consumers (101, 102, 103, 104, 105, 106, 107) of the plastics recycling system (100),
detecting an operating state of the plastics recycling system (100),
identifying the energy consumers (101, 102, 103, 104, 105, 106, 107) required for the operating state,
using a hierarchy of the energy consumers (101, 102, 103, 104, 105, 106, 107) depending on their energy consumption and/or their operating mode and/or the operating state of the plastics recycling system (100),
supplying the required energy consumers (101, 102, 103, 104, 105, 106, 107) with energy taking into account said hierarchy by means of at least one intelligent energy management unit (109) in communication (113) with said energy consumers (101, 102, 103, 104, 105, 106, 107) and in communication with a central control unit (110) for the energy consumers of the system (100) and/or in communication with decentralized control units of the energy consumers of the system (100), wherein
wherein the maximum peak power supplied to the entirety of the required energy consumers (101, 102, 103, 104, 105, 106, 107) is smaller than the sum of the rated peak powers of the individual required energy consumers (101, 102, 103, 104, 105, 106, 107) and wherein it is prevented that all energy consumers are operated with a 100% power simultaneously,
wherein the intelligent energy management unit (109) is supplying the required energy consumers with energy, continuously and/or clocked, taking into account said hierarchy, respectively relevance classes, wherein the maximum peak power which the energy management unit (109) can make available to the entirety of the required energy consumers is smaller than the sum of the rated peak powers of all individual, respectively all required energy consumers,
wherein the used hierarchy of the energy consumers (101, 102, 103, 104, 105, 106, 107) takes into account one or more of the following relevance classes:
relevance class I for energy consumers that are turned on for the given operating state of the plastics recycling system (100) and are operated continuously with a power of 100%,
relevance class II for energy consumers that are turned on for the given operating state of the plastics recycling system (100) and are operated continuously with a power of less than 100%,
relevance class III for energy consumers that are turned on for the given operating state of the system in clock mode and are operated with a power of 100% in clock mode,
relevance class IV for energy consumers that are turned on for the given operating state of the system in clock mode and are operated with a power of less than 100% in clock mode,
relevance class V for energy consumers that are only optional for the given operating state of the system and/or that only require an insignificant amount of energy, respectively power, e.g. << 1%,
wherein the energy supply of the required energy consumers is realized by taking into account the relevance class assigned to them,
and wherein one energy consumer is assigned the relevance class II.

2. Method according to claim 1, wherein the required energy consumers (101, 102, 103, 104, 105, 106, 107) are supplied with energy for a predetermined energy consumer operating time and/or at a predetermined energy consumer turn-on time, depending on the hierarchy of the energy consumers (101, 102, 103, 104, 105, 106, 107) and/or their operating mode and/or the operating state of the plastics recycling system (100).

3. Method according to one of the preceding claims, wherein the energy supply of all, or of a selection of the required energy consumers (101, 102, 103, 104, 105, 106, 107) is reduced or increased at a predetermined point in time during the operation and for a predetermined time of operation.

4. Method according to one of the preceding claims, wherein the detection of the energy consumption of each individual energy consumer (101, 102, 103, 104, 105, 106, 107) of the plastics recycling system (100) and/or the detection of an operating state of the plastics recycling system (100) and/or the identification of the energy consumers required for the operating state and/or the creation of a hierarchy of the energy consumers (101, 102, 103, 104, 105, 106, 107) includes the detection of an input by an operator and/or the reading out of predetermined parameters from a database regarding the energy consumption of the energy consumer (101, 102, 103, 104, 105, 106, 107) and/or the operating state of the plastics recycling system (100) and/or the hierarchy of the energy consumers (101, 102, 103, 104, 105, 106, 107).

5. Method according to one of the preceding claims, wherein at least one ambient parameter of the plastics recycling system (100) is measured, and the supply of the required energy consumers (101, 102, 103, 104, 105, 106, 107) with energy is realized by taking into account said at least one ambient parameter.

6. Method according to claim 5, wherein the at least one ambient parameter is the ambient temperature and/or the ambient humidity and/or the ambient pressure and/or the time of day.

7. System (100) for recycling plastic, comprising:
a plurality of energy consumers (101, 102, 103, 104, 105, 106, 107),
at least one intelligent energy management unit (109) in communication (113) with said energy consumers (101, 102, 103, 104, 105, 106, 107) and in communication with a central control unit (110) for the energy consumers of the system (100) and/or in communication with decentralized control units of the energy consumers of the system (100), being configured to
detect the energy consumption of each individual energy consumer (101, 102, 103, 104, 105, 106, 107) of the plastics recycling system (100),
detect the operating state of the plastics recycling system (100),
identify the energy consumers (101, 102, 103, 104, 105, 106, 107) required for the operating state,
use a hierarchy of the energy consumers (101, 102, 103, 104, 105, 106, 107) depending on their energy consumption and/or their operating mode and/or the operating state of the plastics recycling system,
supply the required energy consumers (101, 102, 103, 104, 105, 106, 107) with energy by taking into account said hierarchy, wherein the maximum peak power which the energy management unit (109) can make available to the entirety of the required energy consumers (101, 102, 103, 104, 105, 106, 107) is smaller than the sum of the rated peak powers of the individual required energy consumers (101, 102, 103, 104, 105, 106, 107) and wherein it is prevented that all energy consumers are operated with a 100% power simultaneously,
wherein the intelligent energy management unit (109) is supplying the required energy consumers with energy, continuously and/or clocked, taking into account said hierarchy, respectively relevance classes, wherein the maximum peak power which the energy management unit (109) can make available to the entirety of the required energy consumers is smaller than the sum of the rated peak powers of all individual, respectively all required energy consumers,
wherein the used hierarchy of the energy consumers (101, 102, 103, 104, 105, 106, 107) takes into account one or more of the following relevance classes:
relevance class I for energy consumers that are turned on for the given operating state of the plastics recycling system (100) and are operated continuously with a power of 100%,
relevance class II for energy consumers that are turned on for the given operating state of the plastics recycling system (100) and are operated continuously with a power of less than 100%,
relevance class III for energy consumers that are turned on for the given operating state of the system in clock mode and are operated with a power of 100% in clock mode,
relevance class IV for energy consumers that are turned on for the given operating state of the system in clock mode and are operated with a power of less than 100% in clock mode,
relevance class V for energy consumers that are only optional for the given operating state of the system and/or that only require an insignificant amount of energy, respectively power, e.g. << 1%,
wherein the energy supply of the required energy consumers is realized by taking into account the relevance class assigned to them,
and wherein one energy consumer is assigned the relevance class II.

8. System (100) according to claim 7, wherein the energy consumers (101, 102, 103, 104, 105, 106, 107) comprise one or more units from the following list:
disintegrating and/or washing units for the plastic materials fed to the recycling process, units for conveying plastic materials and/or other materials, drive units, stirrer units, ventilation units, fan units, pumping units, filter units, screening units, granulating units, drying units, extruder units.

## Revendications

1. Procédé pour assurer le fonctionnement d'une installation de recyclage de matière plastique (100), comprenant :
la détection de la consommation d'énergie de quelques-uns ou de plusieurs ou de tous les récepteurs-consommateurs d'énergie (101, 102, 103, 104, 105, 106, 107) de l'installation de recyclage de matière plastique (100),
la détection d'un état de fonctionnement de l'installation de recyclage de matière plastique (100),
l'identification des récepteurs-consommateurs d'énergie (101, 102, 103, 104, 105, 106, 107) nécessaires au dit état de fonctionnement,
l'utilisation d'une hiérarchie des récepteurs-consommateurs d'énergie (101, 102, 103, 104, 105, 106, 107) en fonction de leur consommation d'énergie et/ou de leur mode de fonctionnement et/ou de l'état de fonctionnement de l'installation de recyclage de matière plastique (100),
l'alimentation en énergie des récepteurs-consommateurs d'énergie (101, 102, 103, 104, 105, 106, 107) nécessaires, en tenant compte de ladite hiérarchie, par au moins une unité de gestion d'énergie (109) intelligente, en communication (113) avec lesdits récepteurs-consommateurs d'énergie (101, 102, 103, 104, 105, 106, 107) et en communication avec une unité de commande centrale (110) pour les récepteurs-consommateurs de l'installation (100), et/ou en communication avec des unités de commande décentralisées des récepteurs-consommateurs d'énergie de l'installation,
procédé
d'après lequel la puissance de crête maximale fournie à l'ensemble des récepteurs-consommateurs d'énergie (101, 102, 103, 104, 105, 106, 107) nécessaires, est inférieure à la somme des puissances de crête nominales des récepteurs-consommateurs d'énergie (101, 102, 103, 104, 105, 106, 107) individuels nécessaires, et d'après lequel on empêche que tous les récepteurs-consommateurs d'énergie fonctionnent à 100% de puissance au même moment,
d'après lequel l'unité de gestion d'énergie (109) intelligente alimente en énergie les récepteurs-consommateurs d'énergie nécessaires, de manière continue et/ou cyclique, en tenant compte de la hiérarchie, et d'après lequel la puissance de crête maximale pouvant être fournie par l'unité de gestion d'énergie (109) à l'ensemble des récepteurs-consommateurs d'énergie nécessaires, est inférieure à la somme des puissances de crête nominales de tous les récepteurs-consommateurs d'énergie nécessaires, et
d'après lequel la hiérarchie utilisée pour les récepteurs-consommateurs d'énergie (101, 102, 103, 104, 105, 106, 107) tient compte de plusieurs des classes d'importance suivantes :
classe d'importance I, pour des récepteurs-consommateurs qui, pour l'état de fonctionnement donné de l'installation de recyclage de matière plastique (100), sont en marche et fonctionnent continuellement avec une puissance de 100%,
classe d'importance II, pour des récepteurs-consommateurs qui, pour l'état de fonctionnement donné de l'installation de recyclage de matière plastique (100), sont en marche et fonctionnent continuellement avec une puissance inférieure à 100%,
classe d'importance III, pour des récepteurs-consommateurs qui, pour l'état de fonctionnement donné de l'installation, sont en marche de manière cyclique et fonctionnent de manière cyclique avec une puissance de 100%,
classe d'importance IV, pour des récepteurs-consommateurs qui, pour l'état de fonctionnement donné de l'installation, sont en marche de manière cyclique et fonctionnent de manière cyclique avec une puissance inférieure à 100%,
classe d'importance V, pour des récepteurs-consommateurs qui, pour l'état de fonctionnement donné de l'installation, ne sont qu'optionnels, et/ou qui ne présentent qu'un besoin en énergie ou de puissance négligeable, par exemple << 1%,
procédé d'après lequel l'alimentation en énergie des récepteurs-consommateurs nécessaires s'effectue en tenant compte de la classe d'importance, qui leur est attribuée,
et d'après lequel un récepteur-consommateur est associé à la classe d'importance II.

2. Procédé selon la revendication 1, d'après lequel les récepteurs-consommateurs d'énergie (101, 102, 103, 104, 105, 106, 107) nécessaires sont alimentés en énergie pour une durée de marche prédéterminée de récepteur-consommateur et/ou à un instant de mise en marche prédéterminée de récepteur-consommateur, en fonction de la hiérarchie des récepteurs-consommateurs d'énergie (101, 102, 103, 104, 105, 106, 107) et/ou de leur mode de fonctionnement et/ou de l'état de fonctionnement de l'installation de recyclage de matière plastique (100).

3. Procédé selon l'une des revendications précédentes, d'après lequel l'alimentation en énergie de tous les récepteurs-consommateurs d'énergie (101, 102, 103, 104, 105, 106, 107) nécessaires ou d'une sélection de ceux-ci, est réduite ou augmentée à un instant prédéterminé du fonctionnement et pour une durée de fonctionnement prédéterminée.

4. Procédé selon l'une des revendications précédentes, d'après lequel la détection de la consommation d'énergie de chaque récepteur-consommateur d'énergie (101, 102, 103, 104, 105, 106, 107) individuel de l'installation de recyclage de matière plastique (100), et/ou la détection d'un état de fonctionnement de l'installation de recyclage de matière plastique (100), et/ou l'identification des récepteurs-consommateurs d'énergie nécessaires au dit état de fonctionnement, et/ou l'établissement d'une hiérarchie des récepteurs-consommateurs d'énergie, comprend la détection d'une saisie par une personne de service et/ou la lecture de paramètres prédéterminés à partir d'une banque de données concernant la consommation d'énergie du récepteur-consommateur d'énergie (101, 102, 103, 104, 105, 106, 107), et/ou concernant l'état de fonctionnement de l'installation de recyclage de matière plastique (100), et/ou concernant la hiérarchie des récepteurs-consommateurs d'énergie (101, 102, 103, 104, 105, 106, 107).

5. Procédé selon l'une des revendications précédentes, d'après lequel on mesure au moins un paramètre d'environnement de l'installation de recyclage de matière plastique (100), et l'alimentation en énergie des récepteurs-consommateurs d'énergie (101, 102, 103, 104, 105, 106, 107) nécessaires s'effectue en tenant compte dudit au moins un paramètre d'environnement.

6. Procédé selon la revendication 5, d'après lequel ledit au moins un paramètre d'environnement est la température environnante, et/ou l'humidité de l'air environnant, et/ou la pression environnante, et/ou l'heure.

7. Installation (100) pour le recyclage de matière plastique, comprenant :
une pluralité de récepteurs-consommateurs d'énergie (101, 102, 103, 104, 105, 106, 107),
au moins une unité de gestion d'énergie (109) intelligente, en communication (113) avec lesdits récepteurs-consommateurs d'énergie (101, 102, 103, 104, 105, 106, 107) et en communication avec une unité de commande centrale (110) pour les récepteurs-consommateurs de l'installation (100), et/ou en communication avec des unités de commande décentralisées des récepteurs-consommateurs d'énergie de l'installation, unité de gestion d'énergie, qui est configurée pour
détecter la consommation d'énergie de chaque récepteur-consommateur d'énergie individuel (101, 102, 103, 104, 105, 106, 107) de l'installation de recyclage de matière plastique (100),
détecter l'état de fonctionnement de l'installation de recyclage de matière plastique (100),
identifier les récepteurs-consommateurs d'énergie (101, 102, 103, 104, 105, 106, 107) nécessaires au dit état de fonctionnement,
utiliser une hiérarchie des récepteurs-consommateurs d'énergie (101, 102, 103, 104, 105, 106, 107) en fonction de leur consommation d'énergie et/ou de leur mode de fonctionnement et/ou de l'état de fonctionnement de l'installation de recyclage de matière plastique, alimenter en énergie les récepteurs-consommateurs d'énergie (101, 102, 103, 104, 105, 106, 107) nécessaires, en tenant compte de ladite hiérarchie,
installation
dans laquelle la puissance de crête maximale pouvant être fournie par l'unité de gestion d'énergie (109) à l'ensemble des récepteurs-consommateurs d'énergie (101, 102, 103, 104, 105, 106, 107) nécessaires, est inférieure à la somme des puissances de crête nominales des récepteurs-consommateurs d'énergie individuels (101, 102, 103, 104, 105, 106, 107) nécessaires, et dans laquelle on empêche que tous les récepteurs-consommateurs d'énergie fonctionnent à 100% de puissance au même moment,
dans laquelle l'unité de gestion d'énergie (109) intelligente alimente en énergie les récepteurs-consommateurs d'énergie nécessaires, de manière continue et/ou cyclique en tenant compte de la hiérarchie, et dans laquelle la puissance de crête maximale pouvant être fournie par l'unité de gestion d'énergie (109) à l'ensemble des récepteurs-consommateurs d'énergie nécessaires, est inférieure à la somme des puissances de crête nominales de tous les récepteurs-consommateurs d'énergie nécessaires, et
dans laquelle la hiérarchie utilisée pour les récepteurs-consommateurs d'énergie (101, 102, 103, 104, 105, 106, 107) tient compte de plusieurs des classes d'importance suivantes :
classe d'importance I, pour des récepteurs-consommateurs qui, pour l'état de fonctionnement donné de l'installation de recyclage de matière plastique (100), sont en marche et fonctionnent continuellement avec une puissance de 100%,
classe d'importance II, pour des récepteurs-consommateurs qui, pour l'état de fonctionnement donné de l'installation de recyclage de matière plastique (100), sont en marche et fonctionnent continuellement avec une puissance inférieure à 100%,
classe d'importance III, pour des récepteurs-consommateurs qui, pour l'état de fonctionnement donné de l'installation, sont en marche de manière cyclique et fonctionnent de manière cyclique avec une puissance de 100%,
classe d'importance IV, pour des récepteurs-consommateurs qui, pour l'état de fonctionnement donné de l'installation, sont en marche de manière cyclique et fonctionnent de manière cyclique avec une puissance inférieure à 100%,
classe d'importance V, pour des récepteurs-consommateurs qui, pour l'état de fonctionnement donné de l'installation, ne sont qu'optionnels, et/ou qui ne présentent qu'un besoin en énergie ou de puissance négligeable, par exemple << 1%,
installation dans laquelle l'alimentation en énergie des récepteurs-consommateurs nécessaires s'effectue en tenant compte de la classe d'importance qui leur est attribuée,
et dans laquelle un récepteur-consommateur est associé à la classe d'importance II.

8. Installation (100) selon la revendication 7, dans laquelle les récepteurs-consommateurs d'énergie (101, 102, 103, 104, 105, 106, 107) comprennent une ou plusieurs unités de la liste suivante :
des unités de broyage et/ou de lavage pour les matières plastiques collectées pour la revalorisation, des unités pour transporter des matières plastiques et/ou d'autres matériaux, des unités d'entraînement, des unités à agitateur-mélangeur, des unités d'aération, des unités à ventilateur, des unités de pompage, des unités à filtrer, des unités à tamiser, des unités de production de granulés, des unités de séchage, des unités d'extrusion.
